# FASCICULE DE BREVET EUROPEEN

(11) **EP 2 672 430 B1**
(45) Date de publication et mention de la délivrance du brevet: **08.11.2017**
(21) Numéro de dépôt: 11179460.8
(22) Date de dépôt: 31.08.2011
(51) Int. Cl.: G06K 19/077

(54) **Carte à microcircuit comprenant un moyen lumineux**
Mikroschaltungskarte, die ein Leuchtmittel umfasst
Microcircuit board including a lighting means

(30) Priorité: 02.09.2010 FR 1056974
(43) Date de publication de la demande: 11.12.2013
(73) Titulaire: Oberthur Technologies, 92700 Colombes (FR)
(72) Inventeur: Le Garrec, Loïc, 35500 Vitré (FR); Vere, Denis, 35270 Argentre du Plessis (FR)
(74) Mandataire: Delumeau, François Guy

(56) Documents cités:
- EP-A2- 1 847 946
- WO-A1-2005/071606
- JP-A- 2004 094 561
- JP-A- 2004 265 176
- US-A- 5 345 367
- US-A1- 2006 289 632

## Description

La présente invention concerne un dispositif électronique comprenant un module. L'invention s'applique notamment à tout type de dispositifs électroniques portables ou de poche pouvant incorporer un tel module, telle qu'une carte à puce, etc.

L'invention s'applique plus particulièrement mais non exclusivement aux cartes à microcircuit munies d'une antenne, telles que les cartes dites sans contact permettant d'établir une communication sans contact à une fréquence de communication prédéfinie avec un terminal externe, telle que par exemple la fréquence 13,56 MHz définie par la norme ISO 14 443.

Elle s'applique également encore aux cartes dites hybrides ou duales, permettant d'établir en plus de la communication sans contact, une communication avec contact par l'intermédiaire d'une interface de contacts externes, apte à venir en contact avec un lecteur adapté.

Généralement, le module comprend un support électriquement non conducteur qui porte le microcircuit sur l'une de ses faces et dans le cas des cartes à contact, une interface de contacts externes sur la face opposée, cette interface étant raccordée électriquement au microcircuit par exemple au travers du support.

Les cartes duales comprennent généralement un corps qui incorpore l'antenne ainsi que le module électronique, logé dans une cavité ménagée dans le corps.

L'antenne et le microcircuit sont alors classiquement raccordés électriquement au moyen de pastilles métalliques lors de l'encartage du module dans le corps.

Un tel agencement structurel permet d'obtenir une relativement bonne portée de communication car les dimensions de l'antenne sont maximisées dans la limite des dimensions du corps de carte. Toutefois, le raccordement du microcircuit à l'antenne présente un certain nombre d'inconvénients, notamment en termes de fiabilité et de rendement de fabrication.

Afin de remédier à ces inconvénients, il est ainsi connu d'intégrer l'antenne directement dans le module électronique, par exemple sur le support portant le microcircuit et ensuite de reporter le module dans le corps de la carte selon les techniques traditionnelles d'encartage des cartes classiques à contact.

Habituellement, les dimensions du support sont limitées aux dimensions de l'interface de contacts externes de forme générale carrée ou circulaire de sorte que le support est entièrement masqué par l'interface métallique.

Mais l'incorporation de l'antenne dans le module impose d'augmenter sensiblement les dimensions de ce support de manière à ce que l'antenne ait une surface utile de réception du champ magnétique suffisante pour conserver une portée de communication satisfaisante.

Or, dans ce cas, une relativement grande surface du support est non recouverte par l'antenne et par l'interface de contacts externes, l'antenne s'étendant généralement en périphérie du support. Cette surface du support à l'état brut produit un effet particulièrement inesthétique dans la carte et donne une impression de fabrication médiocre.

Le document US 5,345,367 décrit une carte d'ordinateur comportant une diode électroluminescente.

Le document JP 2004-265176 décrit un carte à microcircuit comportant une diode électroluminescente.

L'invention a notamment pour but de remédier à aux inconvénients ci-dessus mentionnés.

A cet effet, l'invention concerne une carte à microcircuit comprenant un corps délimitant une tranche de la carte, le corps incorpore un moyen lumineux apte à éclairer de l'intérieur au moins partiellement la tranche de la carte, la lumière émise par le moyen lumineux étant transmise dans l'épaisseur de la carte jusqu'à ladite tranche au travers d'une région dite de transmission réalisée dans un premier matériau et entourée au moins partiellement par un deuxième matériau différent du premier matériau, les matériaux étant choisis pour former un guide d'onde optique au moins selon une direction, caractérisée en ce que le corps est formé par une pile de couches s'étendant au travers du corps, la région de transmission formant une des couches de la pile. D'autres caractéristiques et avantages de l'invention apparaîtront à la lumière de la description qui suit, faite en référence aux dessins annexés dans lesquels :
- la figure 1 est une vue de dessus d'une carte à microcircuit selon l'invention ;
- la figure 2 représente une vue en coupe de la carte de la figure 1 selon la ligne 2-2 de la figure 1.

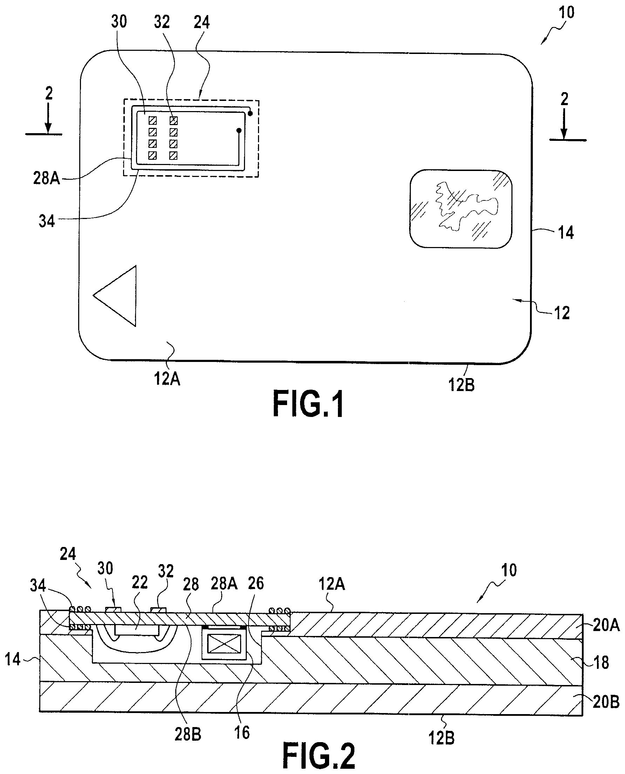

On a représenté sur **la** **figure 1** une carte à microcircuit selon un mode de réalisation de l'invention. Cette carte est désignée par la référence générale 10.

Comme cela est illustré sur **la** **figure 1****,** la carte 10 comprend un corps 12 en forme générale de carte délimitant des première 12A et deuxième 12B faces opposées. En outre, le corps 12 délimite sur sa périphérie une tranche 14 de la carte 10. Cette tranche 14 est définie comme étant le bord externe périphérique entourant la carte 10.

Dans ce mode de réalisation, le corps 12 délimite les dimensions extérieures de la carte 10. Dans cet exemple et de préférence, les dimensions de la carte 10 sont définies par le format ID-1 de la norme ISO 7816 qui est le format classiquement utilisé pour les cartes bancaires de dimensions 86 millimètres par 54 millimètres. Bien entendu, d'autres formats de carte peuvent être utilisés dans le cadre de l'invention, tel que par exemple le format ID-000 de cette même norme.

Dans ce mode de réalisation, le corps 12 incorpore un moyen lumineux 16 (ou source lumineuse 16) apte à éclairer de l'intérieur au moins partiellement la tranche 14 de la carte 10, cette partie éclairée de la carte étant visible de l'extérieur de la carte.

A cet effet, le corps 12 comprend au moins une région 18 apte à transmettre, dans l'épaisseur de la carte, la lumière émise par le moyen lumineux 16 jusqu'à la tranche 14. Autrement dit, le moyen lumineux 16 est agencé dans le corps 12 pour éclairer la tranche 14 de la carte 10 au travers de cette région de transmission 18. La région de transmission 18 est réalisée dans un premier matériau et est entourée au moins partiellement un deuxième matériau différent du premier matériau. Le corps 12 est formé par une pile de couches s'étendant au travers du corps 12 et la région de transmission 18 forme une des couches de la pile.

Comme cela est illustré sur **la** **figure 2****,** le corps 12 comprend une pile d'au moins trois couches : une couche centrale 18 formant la région de transmission intercalée entre au moins deux couches externes 20A, 20B dans le deuxième matériau, ces deux couches formant une région dite périphérique.

Ainsi, de préférence, le corps 12 est mis en forme par lamination, c'est-à-dire par formation par exemple au moyen d'une presse et dans une opération de lamination à chaud, de la pile de couches ou feuilles laminées réalisées par exemple en matériau thermoplastique.

Bien entendu, dans une variante non illustrée, le corps 12 peut être mis en forme par moulage, par exemple de matière plastique.

Les matériaux sont choisis de manière à ce que les régions 18, 20A, 20B de transmission et périphériques forment un guide d'onde optique selon au moins une direction.

La couche de transmission 18 est par exemple réalisée en polycarbonate. Eventuellement, la couche peut être réalisée également dans un matériau se présentant sous la forme d'un film de fibres de verre tel que des composés de type LGF (acronyme anglais pour « Light Guide Film ») réalisé par exemple à base de polyuréthane ou d'acrylique.

Par exemple, les couches périphériques 20A, 20B entourant la couche de polycarbonate sont réalisées en PVC (acronyme pour polychlorure de vinyle).

De préférence, afin d'optimiser le guidage optique des ondes, le matériau de la couche de transmission 18 a un indice de réfraction supérieur à l'indice de réfraction des matériaux constituant les deux couches externes 20A, 20B entourant la couche de transmission 18.

De préférence, le moyen 16 émet dans le spectre visible.

De préférence, ces deux couches externes 20A, 20B sont opaques. Ceci permet notamment de mettre en valeur l'éclairage de la tranche de la carte 10.

Dans un mode de réalisation préféré, le moyen lumineux 16 est optiquement dissimulé entre les deux faces 12A, 12B de la carte 10.

Comme cela est illustré sur **la** **figure 2** on voit que le moyen lumineux 16 est de préférence agencé à l'intérieur de la région de transmission 18.

Ainsi, dans le mode de réalisation préféré de l'invention, la carte 10 comprend un microcircuit 22 apte à échanger, à traiter et/ou à mémoriser des données. Dans un mode de réalisation préféré, le corps 12 comprend un module à microcircuit 24 incorporant le microcircuit 22.

Par exemple, de préférence, le corps 12 comprend une cavité 26 de réception du module 24, cette cavité 26 étant réalisée au moins partiellement dans l'épaisseur de la région de transmission 18, de manière à ce que le moyen lumineux 16 s'étende au moins partiellement dans la région de transmission 18 lorsque le module 24 est logé dans la cavité 26.

Par exemple, le module 24 comprend un support 28 délimitant une face externe 28A destinée à être visible et une face interne 28B masquée destinée à être tournée vers la cavité 26 et portant le microcircuit 22 ainsi que le moyen lumineux 16.

Ainsi, de préférence, le moyen lumineux 16 est optiquement dissimulé à l'intérieur de la carte 10 entre les deux faces 12A, 12B de la carte 10. En revanche, le moyen lumineux 16 peut être observé depuis la tranche 14 de la carte 10.

Dans le cas où le support 28 est translucide et laisse passer la lumière du moyen 16, un cache opaque peut être agencé sur le support 28 sensiblement au droit du moyen lumineux 16. Un motif peut par exemple être imprimé sur la face visible 28A du support 28 pour masquer la lumière émise par la source 16. En variante, le support 28 peut également être choisi opaque.

Toutefois, l'éclairage du module 24 par la source 16 peut également être mis à profit pour apporter un effet esthétique ou technique supplémentaire.

Dans le mode de réalisation préféré de l'invention, la carte 10 est de type duale, c'est-à-dire qu'elle permet à la fois une communication à contact et une communication sans contact.

A cet effet, le module à microcircuit 24 comprend également une interface 30 de contact reliée électriquement au microcircuit 22. Cette interface 30 permet l'établissement d'une communication à contact de la carte 10, lorsque cette dernière est insérée dans un lecteur de carte adapté. L'interface 30 est par exemple portée par la face externe 28A du support 28 du module 24.

Cette interface 30 comprend par exemple une série de plages 32 métalliques de contacts électriques, conformes à une norme prédéfinie de carte à microcircuit. Par exemple, les plages de contacts sont conformes à la norme ISO 7816. Dans ce mode de réalisation, les plages 32 de contact d'interface 30 correspondent aux contacts C1 à C8 de la norme ISO 7816.

L'interface 30 de la carte 10 est de préférence réalisée dans une couche de matériau métallique telle que du cuivre mais peut également être réalisée en variante, par sérigraphie d'encre conductrice de type encre époxy chargée de particules d'argent ou d'or ou par sérigraphie d'un polymère électriquement conducteur.

De façon préférentielle, les plages sont raccordées électriquement au microcircuit par des fils électriquement conducteurs tels que par exemple des fils d'or traversant des vias ménagés dans le support du module, eux-mêmes raccordés à des pistes électriquement conductrices de liaison s'étendant sur la face interne du support. Ces pistes n'ont pas été représentées sur **la** **figure 2****.**

Pour l'établissement d'une communication sans contact avec un terminal externe, tel qu'un lecteur externe, la carte 10 comprend également au moins une antenne de communication en champ proche 34.

L'antenne 34 est raccordée, conformément à l'invention, de préférence au microcircuit 22 et est apte à alimenter le microcircuit 22 par couplage électromagnétique avec un terminal externe (non représenté).

La fréquence de communication du microcircuit avec le terminal externe est de préférence la fréquence de communication de 13,56 MHz définie par la norme ISO 14 443.

De préférence, l'antenne 34 est également raccordée au moyen lumineux 160 pour son alimentation.

Dans une variante de l'invention, la carte 10 comprend des première et deuxième antennes raccordées respectivement au microcircuit 22 et au moyen lumineux 16. Par exemple, l'antenne 34 s'étend à l'intérieur du module 24. De préférence, l'antenne 34 s'étend sur le support 28, par exemple sur les deux faces opposées du support de sorte que l'antenne 34 est visible partiellement depuis l'extérieur.

De préférence, la source lumineuse 16 est une diode électroluminescente. De façon connue en soi, une diode est un composant électronique capable d'émettre de la lumière lorsqu'elle est parcourue par un courant électrique. De préférence, la diode est de type CMS c'est-à-dire composant monté en surface.

Ainsi, de façon classique, un composant monté en surface peut être rapporté sur un substrat d'un circuit imprimé par collage, par brasage ou soudage, à la différence d'un composant muni de broches traversantes dont l'assemblage au substrat nécessite la formation de trous dans le substrat pour laisser passer les broches.

Dans l'exemple illustré sur **la figure 7,** la diode 16 est assemblée au support 28 du module 24 par soudage ou brasage. Par exemple, l'antenne 34 est raccordée au moyen lumineux 16 et dans ce cas le moyen lumineux 16 est alimenté par l'antenne 34.

Dans une variante, le moyen lumineux 16 est raccordé électriquement à un contact externe d'alimentation s'étendant sur la carte 10, par exemple un des contacts d'alimentation de l'interface 30 de contacts 32.

De préférence, le moyen lumineux 16 est apte à être commandé en fonction d'un état de communication du microcircuit 22, par exemple en fonction de l'état d'une transaction.

En variante, la carte 10 peut être uniquement de type sans contact, dans ce cas, la carte 10 est de préférence dépourvue de l'interface de contact externe. Dans une autre variante, la carte 10 peut être uniquement de type à contact et dans ce cas, la carte 10 est dépourvue de l'antenne de communication à champ proche.

Dans un autre mode de réalisation de l'invention non illustré sur les figures, la carte 10 peut comprendre au moins deux moyens lumineux. Par exemple, les deux moyens lumineux sont aptes à être commandés en fonction de premier et deuxième états de communication du microcircuit.

Ceci permet à l'utilisateur de détecter de façon remarquable deux états de communication distincts du microcircuit ce qui, dans certaines applications, peut permettre de réduire les erreurs de sélection d'applications par l'utilisateur, notamment lorsque la carte fonctionne en mode à contact et est insérée dans un lecteur de carte.

En effet, dans ce cas, l'utilisateur perçoit nettement le changement de couleur de la carte puisque cette dernière est éclairée le long de la tranche.

On va maintenant décrire les principaux aspects de fonctionnement de la carte illustrée par **les** **figures 1 et 2****.**

Initialement, l'utilisateur est hors de portée d'un terminal externe de contact. Lorsqu'il approche la carte du terminal externe, cette dernière s'allume le long de la tranche. Ce changement d'état de la carte est immédiatement perçu par l'utilisateur.

En outre, lorsque l'utilisateur insère la carte dans un lecteur de carte à contact, le voyant lumineux est alimenté via l'interface de contact 30 et la tranche de la partie de la carte qui dépasse hors du lecteur de carte est également éclairée.

En particulier, le moyen lumineux peut être incorporé dans le corps. Par exemple, le moyen lumineux est raccordé à une antenne de communication en champ proche pour son alimentation, l'ensemble étant disposé sur une couche d'une pile de couches laminées entre elles formant le corps de la carte.

## Revendications

1. Carte (10) à microcircuit comprenant un corps (12) délimitant une tranche (14) de la carte (10), le corps (12) incorpore un moyen lumineux (16) apte à éclairer de l'intérieur au moins partiellement la tranche (14) de la carte (10), la lumière émise par le moyen lumineux (16) étant transmise dans l'épaisseur de la carte jusqu'à ladite tranche au travers d'une région (18) dite de transmission (18) réalisée dans un premier matériau et entourée au moins partiellement par un deuxième matériau différent du premier matériau, les matériaux étant choisis pour former un guide d'onde optique au moins selon une direction, **caractérisée en ce que** le corps (12) est formé par une pile de couches s'étendant au travers du corps (12), la région de transmission (18) formant une des couches de la pile.

2. Carte (10) selon la revendication 1, dans laquelle le moyen lumineux (16) est agencé à l'intérieur de la région de transmission (18).

3. Carte (10) selon la revendication 2, dans laquelle le moyen lumineux (16) est optiquement dissimulé entre une première (12A) et une deuxième (12B) faces de la carte (10).

4. Carte (10) selon l'une quelconque des revendications 1 à 3, comprenant un module (24) comprenant le microcircuit (22) et le moyen lumineux (16), le corps (12) comprenant une cavité (26) de réception du module (24).

5. Carte (10) selon la revendication 4, dans laquelle la cavité (26) est réalisée au moins partiellement dans l'épaisseur de la région de transmission (18) de manière à ce que le moyen lumineux (16) s'étende au moins partiellement à l'intérieur de la région de transmission (18).

6. Carte (10) selon la revendication 4 ou 5, dans laquelle le module (24) comprend un support (28) délimitant une première face (28A) destinée à être visible et une deuxième face (28B) opposée destinée à être en regard de la cavité (26), la deuxième face (28B) portant au moins le moyen lumineux (16).

7. Carte (10) selon l'une quelconque des revendications 1 à 6, comprenant une antenne (34) de communication en champ proche raccordée au microcircuit (22) et au moyen lumineux (16).

8. Carte (10) selon l'une quelconque des revendications 1 à 6, comprenant des première et deuxième antennes de communication en champ proche raccordées respectivement au microcircuit (22) et au moyen lumineux (16).

9. Carte (10) selon la revendication 4 **caractérisé en ce que** ledit module incorpore au moins une antenne de communication en champ proche raccordée au microcircuit (22) ou une antenne de communication en champ proche raccordée au moyen lumineux (16).

10. Carte (10) selon l'une quelconque des revendications 1 à 9, dans laquelle le moyen lumineux (16) est raccordé électriquement à un contact externe d'alimentation s'étendant sur la carte (10) et apte à venir en contact avec un lecteur de carte externe avec contact.

11. Carte (10) selon l'une quelconque des revendications 1 à 10, dans laquelle le moyen lumineux (16) est apte à être commandé en fonction d'un état de communication du microcircuit (22).

12. Carte (10) selon la revendication 11, comprenant des premier et deuxième moyens lumineux aptes à être commandés en fonction de premier et deuxième états de communication du microcircuit (22).

13. Carte (10) selon l'une quelconque des revendications 1 à 12, étant une carte à microcircuit de type sans contact, duale ou à contact.

## Patentansprüche

1. Mikroschaltungskarte (10), umfassend einen Körper (12), der ein Stück (14) der Karte (10) begrenzt, wobei der Körper (12) ein Leuchtmittel (16) enthält, das geeignet ist, das Stück (14) der Karte (10) mindestens teilweise von innen zu beleuchten, wobei das Licht, das von dem Leuchtmittel (16) emittiert wird, in die Dicke der Karte bis zu dem Teil über einen Bereich (18), der Übertragungsbereich (18) genannt wird, übertragen wird, der aus einem ersten Material hergestellt ist und mindestens teilweise von einem zweiten Material umgeben ist, das von dem ersten Material verschieden ist, wobei die Materialien ausgewählt sind, um mindestens in einer Richtung einen optischen Wellenleiter zu bilden, **dadurch gekennzeichnet, dass** der Körper (12) durch einen Stapel von Schichten gebildet ist, die sich durch den Körper (12) erstrecken, wobei der Übertragungsbereich (18) eine der Schichten des Stapels bildet.

2. Karte (10) gemäß Anspruch 1, wobei das Leuchtmittel (16) im Inneren des Übertragungsbereichs (18) angeordnet ist.

3. Karte (10) gemäß Anspruch 2, wobei das Leuchtmittel (16) zwischen einer ersten (12A) und einer zweiten (12B) Seite der Karte (10) optisch verdeckt ist.

4. Karte (10) gemäß einem der Ansprüche 1 bis 3, umfassend ein Modul (24), das die Mikroschaltung (22) und das Leuchtmittel (16) aufweist, wobei der Körper (12) einen Hohlraum (26) zum Aufnehmen des Moduls (24) aufweist.

5. Karte (10) gemäß Anspruch 4, wobei der Hohlraum (26) mindestens teilweise in der Dicke des Übertragungsbereichs (18) derart ausgebildet ist, dass sich das Leuchtmittel (16) mindestens teilweise im Inneren des Übertragungsbereichs (18) erstreckt.

6. Karte (10) gemäß Anspruch 4 oder 5, wobei das Modul (24) einen Träger (28) aufweist, der eine erste Seite (28A), die dazu bestimmt ist, sichtbar zu sein, und eine gegenüberliegende, zweite Seite (28B) begrenzt, die dazu bestimmt ist, gegenüber von dem Hohlraum (26) zu liegen, wobei die zweite Seite (28B) mindestens das Leuchtmittel (16) trägt.

7. Karte (10) gemäß einem der Ansprüche 1 bis 6, umfassend eine Nahfeldkommunikationsantenne (34), die an die Mikroschaltung (22) und an das Leuchtmittel (16) angeschlossen ist.

8. Karte (10) gemäß einem der Ansprüche 1 bis 6, umfassend eine erste und zweite Nahfeldkommunikationsantenne, die jeweils an die Mikroschaltung (22) und an das Leuchtmittel (16) angeschlossen sind.

9. Karte (10) gemäß Anspruch 4, **dadurch gekennzeichnet, dass** in dem Modul mindestens eine Nahfeldkommunikationsantenne, die an die Mikroschaltung (22) angeschlossen ist, oder eine Nahfeldkommunikationsantenne, die an das Leuchtmittel (16) angeschlossen ist, integriert ist.

10. Karte (10) gemäß einem der Ansprüche 1 bis 9, wobei das Leuchtmittel (16) an einen externen Stromversorgungskontakt elektrisch angeschlossen ist, der sich auf der Karte (10) erstreckt und geeignet ist, mit einem externen Kartenleser mit Kontakt in Kontakt zu kommen.

11. Karte (10) gemäß einem der Ansprüche 1 bis 10, wobei das Leuchtmittel (16) geeignet ist, in Abhängigkeit von einem Kommunikationszustand der Mikroschaltung (22) gesteuert zu werden.

12. Karte (10) gemäß Anspruch 11, umfassend ein erstes und zweites Leuchtmittel, die geeignet sind, in Abhängigkeit von einem ersten und zweiten Kommunikationszustand der Mikroschaltung (22) gesteuert zu werden.

13. Karte (10) gemäß einem der Ansprüche 1 bis 12, die eine Mikroschaltungskarte des Typs der kontaktlosen Karte, der Dual-Interface-Karte oder der kontaktbehafteten Karte ist.

## Claims

1. A microcircuit card (10) comprising a body (12) defining an edge (14) of the card (10), the body (12) incorporating a light-emitting means (16) able to illuminate from the inside the edge (14) of the card (10) at least partially, the light emitted by the light-emitting means (16) being transmitted into the thickness of the card up to said edge through a so-called transmission region (18) made from a first material and at least partially surrounded by a second material different from the first material, the materials being chosen to form an optical waveguide at least in one direction, **characterized in that** the body (12) is formed by a stack of layers extending through the body (12), the transmission region (18) forming one of the layers of the stack.

2. The card (10) according to claim 1, wherein the light-emitting means (16) is arranged inside the transmission region (18).

3. The card (10) according to claim 2, wherein the light-emitting means (16) is optically hidden between a first (12A) and second (12B) face of the card (10).

4. The card (10) according to any one of claims 1 to 3, comprising a module (24) comprising the microcircuit (22) and the light-emitting means (16), the body (12) comprising a receiving cavity (26) of the module (24).

5. The card (10) according to claim 4, wherein the cavity (26) is made at least partially in the thickness of the transmission region (18) such that the light-emitting means (16) extends at least partially inside the transmission region (18).

6. The card (10) according to claim 4 or 5, wherein the module (24) comprises a carrier (28) defining a first face (28A) intended to be visible and a second opposite face (28B) intended to be across from the cavity (26), the second face (28B) bearing at least the light-emitting means (16).

7. The card (10) according to any one of claims 1 to 6, comprising a near field communication antenna (34) connected to the microcircuit (22) and the light-emitting means (16).

8. The card (10) according to any one of claims 1 to 6, comprising first and second near field communication antennas respectively connected to the microcircuit (22) and the light-emitting means (16).

9. The card (10) according to claim 4, **characterized in that** said module incorporates at least one near field communication antenna connected to the microcircuit (22) or a near field communication antenna connected to the light-emitting means (16).

10. The card (10) according to any one of claims 1 to 9, wherein the light-emitting means (16) is electrically connected to an outside power supply contact extending on the card (10) and able to come into contact with an external card reader with contact.

11. The card (10) according to any one of claims 1 to 10, wherein the light-emitting means (16) is able to be controlled as a function of a communication status of the microcircuit (22).

12. The card (10) according to claim 11, comprising first and second light-emitting means able to be controlled as a function of first and second communication statuses of the microcircuit (22).

13. The card (10) according to any one of claims 1 to 12, being a microcircuit card of the contactless, dual or contact type.
